# EUROPEAN PATENT SPECIFICATION

(11) **EP 3 093 732 B1**
(45) Date of publication and mention of the grant of the patent: **06.03.2019**
(21) Application number: 16169424.5
(22) Date of filing: 12.05.2016
(51) Int. Cl.: G06F 3/03, G06F 3/0484, G06F 3/0487, G06F 1/16, H04N 5/232, H04M 1/725, H04M 1/60, H04M 1/05, H04B 1/3827, G06F 3/16, G06F 3/0346, G06F 3/01

(54) **ELECTRONIC APPARATUS AND METHOD FOR CONTROLLING THEREOF**
ELEKTRONISCHE VORRICHTUNG UND VERFAHREN ZUR STEUERUNG DAVON
APPAREIL ÉLECTRONIQUE ET SON PROCÉDÉ DE COMMANDE

(30) Priority: 15.05.2015 KR 20150068171
(43) Date of publication of application: 16.11.2016
(73) Proprietor: Samsung Electronics Co., Ltd., Gyeonggi-do 16677 (KR)
(72) Inventor: Jung, Yeon-hee, Seoul (KR); Kwak, Ji-yeon, Seoul (KR); Kim, Ji-hyun, Seongnam-si (KR); Park, Hae-yoon, Seoul (KR); Lim, Eun-young, Seoul (KR)
(74) Representative: Nederlandsch Octrooibureau

(56) References cited:
- EP-A1- 2 871 822
- DE-U1- 20 319 012
- US-A1- 2014 267 032
- US-A1- 2015 121 228

## Description

### BACKGROUND

### 1. Field of the Disclosure

The present disclosure relates generally to an electronic apparatus and a controlling method thereof, and more particularly, to an electronic apparatus in which various disposition forms of a display and a strap may be used as a user interaction and a controlling method thereof.

### 2. Description of the Related Art

In accordance with the recent development of computer technology, a wearable computer has been introduced and included in the clothing, etc. A wearable computer is a computer which performs the function of a personal computer (PC) while being disposed in clothing. Wearable computers were first used for military purposes, then for everyday life, and have since expanded into fashion, mobile communication devices, and digital products.

As such, a wearable computer is realized in a form that is wearable by a person. Thus, in general, a wearable computer is compact in size and generally has a small-sized display. Accordingly, due to its small size, these devices may have a limited number of buttons or a limited size for a screen required to operate the wearable device. Thus, it is difficult to easily operate a wearable device.

EP 2 871 822 A1 discloses a necklace type mobile terminal with a strap, a body unit movable along the strap, a sensing unit to detect in change of position of the body unit along the strap, and a processor to detect for detecting a user interaction. The mobile terminal may have a microphone, a camera and a speaker.

DE 203 19 012 U1 discloses a wireless headset having a strap, and an earphone and a microphone connected to the strap, and a movement sensing unit for detecting a movement of the earphone.

### SUMMARY

The present invention provides an apparatus according to claim 1 and a method according to claim 12. Further aspects of the invention are outlined in the dependent claims. Embodiments which do not fall within the scope of the claims do not describe part of the present invention.

The present disclosure has been made to address at least the above-mentioned problems and/or disadvantages and to provide at least the advantages described below.

Accordingly, an aspect of the present disclosure is to provide an electronic apparatus in which various disposition of a display and a strap may be used as a user interaction for controlling the electronic apparatus

Accordingly, an aspect of the present disclosure is to provide a method of controlling an electronic apparatus by detecting a position of a body unit on a strap of the electronic apparatus and recognizing a change in position of the body unit as a user interaction corresponding to a function of the electronic apparatus.

In accordance with an aspect of the present disclosure, an electronic apparatus is provided. The electronic apparatus includes a strap, a body unit movably disposed on the strap, a sensing unit that detects a change of position of the body unit on the strap, and a processor that detects a user interaction corresponding to the change of position.

In accordance with another aspect of the present disclosure, a method of an electronic apparatus including a strap is provided. The method includes detecting a change of position of a body unit movably disposed on the strap; and detecting a user interaction corresponding to the change of position.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a form of an electronic apparatus, according to an embodiment of the present disclosure;
FIG. 2 illustrates a detailed configuration of an electronic apparatus, according to an embodiment of the present disclosure;
FIGs. 3 to 4 illustrate various interactions using a strap of an electronic apparatus, according to an embodiment of the present disclosure;
FIGs. 5 and 6 illustrate various disposition forms of earphones, according to an embodiment of the present disclosure;
FIGs. 7 to 10 illustrate a user interface window displayable in response to a user interaction, according to an embodiment of the present disclosure;
FIG. 11 illustrates a form of electronic apparatus, according to an embodiment of the present disclosure;
FIG. 12 illustrates a detailed configuration of an electronic apparatus, according to an embodiment of the present disclosure;
FIG. 13 illustrates a detailed configuration of a strap of an electronic apparatus, according to an embodiment of the present disclosure;
FIGs. 14 to 19 illustrate various interactions using a strap of an electronic apparatus worn as a bracelet, according to an embodiment of the present disclosure; and
FIGs. 20 to 27 illustrate various interactions using a strap of an electronic apparatus worn as a necklace, according to an embodiment of the present disclosure; and
FIG. 28 is a flowchart of a method of an electronic apparatus, according to an embodiment of the present disclosure.

### DETAILED DESCRIPTION OF EMBODIMENTS OF THE PRESENT DISCLOSURE

Hereinafter, the present disclosure will be described in detail with reference to the accompanying drawings, in which like reference numbers refer to like parts, components, and structures. However, embodiments described herein are not intended to limit the present disclosure to particular embodiments, and the present disclosure should be construed as including various modifications, equivalents, and/or alternatives.

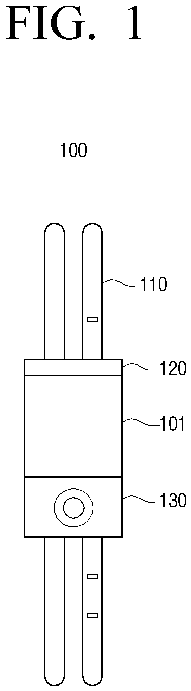

FIG. 1 illustrates a form of an electronic apparatus, according to an embodiment of the present disclosure;

Referring to FIG. 1, an electronic apparatus 100, according to an embodiment of the present disclosure, includes a strap 110 and a body unit 101 movably disposed on the strap. Such electronic apparatus 100 may, as a non-limiting example, be a wearable device in the form of a necklace or a zipper.

The body unit 101 may be moved on the strap 110. The body unit 101 includes a display 120, a photographing unit 130, and a sensing unit 160. The body unit 101 further includes two penetrations through which a strap may penetrate, so that the body 101 may be moved on the strap.

The display 120 provides various information within the electronic apparatus 100 to a user. The display 120 may display a user interface (UI) element corresponding to a position of the body 101 on a strap. In this case, information on a UI may be a text indicating preset information, an icon corresponding to particular information, widget information, a background screen, and the like.

The photographing unit 130 includes a photographing element to photograph an image or a video. The photographing unit 130 may be disposed in the direction of a front surface of the body unit 101 as illustrated in FIG. 1. However, a disposition direction of the photographing unit 130 is not limited thereto, and the photographing unit may be disposed on a bottom surface of the body unit 101.

The sensing unit 160 detects a change of position of the body unit 101 on the strap 110. Specifically, the sensing unit 160, using an IR sensor and an acceleration sensor, detects whether the body unit 101 is moved up or down on the strap 110, and detects the amount the body unit 101 has moved. Additionally, the distance to a particular body part of a user may be measured using, for example, an IR sensor. However, according to an embodiment, any sensor capable of measuring a distance may be used, such as an ultrasonic sensor, may be adopted regardless of types.

The strap 110 is connected to the body unit 101 by penetrating the body unit 101. The strap 110 may be a strap that is used for general clothes. The strap 110 may include a plurality of pressure sensors that may detect a user grip with respect to a strap of the user. In this case, the strap 110 may be connected to the body unit 101 not only physically but also electrically.

The electronic apparatus 100 detects a position of the body unit 101 on the strap 110, to receive a change of position as a user interaction. Also, the electronic apparatus 100 may provide various functions corresponding to the input various interactions.

A button to receive a particular command and a microphone 180 to record a user voice maybe further provided on the body unit 101.

A plurality of straps 110 may be connected to the body unit 101. For example, as shown in FIG. 1, two straps 110 may be connected to the body unit 101. However, according to an embodiment, the connection may be such that both ends of one strap 110 penetrate the body unit 101 in the same direction.

Further, the body unit 101 may also include only one penetration, and only one strap 110 may be penetrated into the penetration.

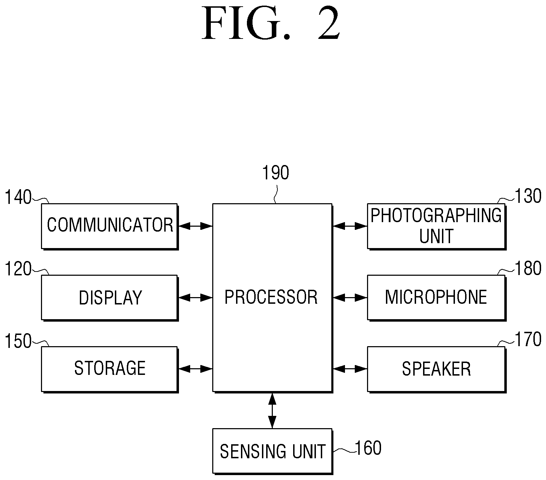

FIG. 2 illustrates a detailed configuration of the electronic apparatus, according to an embodiment of the present disclosure.

Referring to FIG. 2, the body unit 101 of the electronic apparatus 100 includes the display 120, the photographing unit 130, a communicator 140, a storage 150, the sensing unit 160, a speaker 170, a microphone 180, and a processor 190. In this example, the electronic apparatus 100 may be a notebook computer, a tablet computer, an MP3 player, a portable multimedia player (PMP), a mobile phone, an electronic watch, and the like.

The display unit 120 displays various information supported by the electronic apparatus 100. Specifically, the display 120 displays a UI element corresponding to a user interaction recognized by the processor 190. According to an embodiment, the display 120 may be realized as a touch screen where input and output functions are operated in one device. Various user interface windows may be displayed on the display 120.

The photographing unit 130 includes a photographing element to capture a photo or record a video. The photographing unit 130 may be disposed in the direction of a front surface of the body unit 101 or at the bottom of the body unit 101.

The photographing unit 130 may be activated or inactivated in response to a user interaction. The photographing unit 130 may vary a photographing magnification in response to a user interaction in the state that the photographing unit 130 is activated. A photographing magnification may be at least one of an optical magnification and a digital magnification.

The communicator 140 is configured to connect to another terminal device (or host device) or the Internet, and may be connected via a cable or wirelessly. Specifically, the communicator 140 may transmit and receive data to and from an external apparatus (for example, a smartphone) using a wireless communication method, such as Bluetooth, radio frequency (RF) communication, WiFi, near field communication (NFC), etc. In this example, the data may not only be content information such as weather information, but also telephone streaming data and music streaming data transmitted from a smartphone.

Alternatively, the communicator 140 may be connected to an external apparatus (for example, desktop computer) using a wired communication method, and may input and output various data using the connected wired communication method. A port for connecting the electronic apparatus 100 to an external apparatus via a cable may be used to charge the battery within the electronic apparatus 100.

The storage 150 is configured to store a program to drive the electronic apparatus 100. Specifically, the storage 150 stores a program for powering the electronic apparatus 10. The program includes not only an application program to provide a particular service, but also an operating system to drive the application program.

The storage 150 may be realized as a recording medium within the electronic apparatus 100 or as an external storage medium, such as a removable disk including a USB memory, a web server via network, etc.

The sensing unit 160 is configured to detect a change of position of the body unit 101 on the strap 110. Specifically, the sensing unit 160, using an IR sensor and an acceleration sensor, detects whether the body unit 101 on the strap 110 has moved up or down, etc., and the amount it has moved. The sensing unit 160 detects a touch input. Specifically, the sensing unit 160 detects a touch input with respect to the body unit 101. The sensing unit 160 may detect a touch input with respect to the body unit 101 that covers around the display 120, but also a touch input with respect to the display 120. That is, the sensing unit 160 may include a first touch sensor to detect a user touch on the body unit 101, and a second touch sensor to detect a touch input on the display 120. According to an embodiment, the second touch sensor and the display 120 may include only one physical configuration, that is, a touch screen.

The sensing unit 160 is configured to detect a position of a touch input on the strap 110. Specifically, in the case where a plurality of pressure sensors are disposed within the strap 110, the sensing unit 160 reads information on a pressure detected in each of the pressure sensors, and a position of the strap 110 gripped by a user.

The speaker 170 is configured to output a sound. Specifically, the speaker 170 may output a sound corresponding to voice data received via the communicator 140, or may output pre-registered audio. The speaker 170 may be realized as earphones. The earphones may be directly connected to the body unit 101, or may be connected to the body unit 101 via the strap 110.

The microphone 180 is configured to record a sound and generate voice data. The microphone 180 may be activated or inactivated in response to a user interaction. Also, a recording sensitivity of the microphone 180 may be adjusted in response to the user interaction.

The processor 190 is configured to control the electronic apparatus 100. Specifically, the processor 190 is configured to determine an operational state (or operation mode) of the electronic apparatus 100. When there is no user input for a predetermined time, or when no operation is performed for a predetermined time, the processor 190 may determine an operational state of the electronic apparatus 100 as a power saving state (or power saving mode).

While the electronic apparatus 100 is in a power saving state, when detecting a change of position of the body unit 101 by a user, when detecting a touch input to the display 120, or when a receipt of data or a wake-up command is received from an external apparatus via the communicator 140, the processor 190 may determine the operational state of the electronic apparatus 100 to be in a normal state (or normal mode, active mode).

The processor 190 may determine an operation status of the electronic apparatus 100 according to a position of the body 101 on the strap. In this case, an operation status corresponds to various functions supported by the electronic apparatus 100, which may include music reproduction status, recording status, voice call status, etc. According to an embodiment, an operation status of the electronic apparatus 100 may be determined based on not only a position of the body unit 101 on the strap but also a position of grip of a user on the strap.

The music reproduction status is a status where music is played in the electronic apparatus 100. The recording status is a status where photographing is performed using a photographing element provided in the electronic apparatus 100. The voice call status is a status where a user makes a call using a speaker 170 and a microphone 180 in the electronic apparatus 100.

Such operation status of the electronic apparatus 100 may be determined in consideration of not only a disposition of the body unit 101 on the strap 110, but also an application being executed.

The processor 190 controls each of configurations of the electronic apparatus 100 to correspond to the determined operational state. Specifically, when an operational state of the electronic apparatus 100 is changed to a power saving state, the processor 190 controls the display 120 not to display preset information. When the electronic apparatus is in a normal state, the processor 190 controls the display 120 to display a UI element corresponding to a predetermined operational state. When a position of the body unit 101 is changed, the processor 190 displays a UI element corresponding to the position change of the body unit 101 on the display 120.

The processor 190 controls to display on the display 120 a UI element corresponding to a position of the body unit 101 on the strap 110 according to a change of position of the body unit 101. For example, in the state that the body unit 101 is positioned in the middle of the strap 110, when the body unit 101 changes the position to a direction close to a user's face, the processor 190 changes the operation status to a voice recording state or voice call state, and controls the display 120 to display a UI element corresponding to the voice recording state or voice call state. That is, the processor 190 activates the microphone 180. In this case, when the photographing unit 130 is activated, the processor 190 may change the photographing unit 130 to an inactivated state.

In the state that the body unit 101 is positioned in the middle of the strap, when the body unit 101 changes position to a direction far from the user's face, the processor 190 changes an operational state to a photographing state, and controls the display 120 to display a user interface (UI) element corresponding to the photographing state. That is, the processor 190 may activate the photographing unit 130. In this case, in the state that the microphone 180 is in an activated state, and is not recording video, the processor 190 changes the microphone 180 to an inactivated state.

To this end, the processor 190 is configured to first detect a user interaction. More specifically, the processor 190 may detect a user interaction based on information on a distance sensed in the sensing unit 160 and information on a moving direction of the body unit 101. A user interaction may vary depending on the position of the body unit 101.

The processor 190 may, when detecting a change of position as described above, check whether a user touch input is detected via the sensing unit 160. Through this process, when a user touch is detected, it is determined that a position change of the body unit 101 as described above is a manipulation for interaction.

On the other hand, when no touch input is detected, the processor 190 determines that a form of strap is changed by a posture change or moving of the user, not that the user intentionally performs manipulation for interaction, and then does not detect the interaction as described above. That is, the processor 190 may detect a user interaction using the position change information only when a user touch input is detected.

According to an embodiment, it the processor 190 may alternatively detect a user interaction all the time, but performs an action corresponding to a detected interaction only when a touch input is detected.

The processor 190 controls to display on the display 120 a UI element corresponding to a detected user interaction. For example, when a user interaction is to release a power saving state, the processor 190 may control the display 120 to display a UI element (for example, time information, etc.) corresponding to a current operation status.

The processor 190 controls voice data generated in the microphone 180 to be transmitted to another electronic apparatus, or control voice data transmitted from the another electronic apparatus to be output from the speaker 170. The processor 190 may, when it is necessary to inform that an operation corresponding to a user interaction is being performed, display a UI element, or output voice data corresponding to the interaction to the speaker 170, so that voice feedback corresponding to the interaction is provided to a user.

The electronic apparatus 100 may detect a position of the body unit 101 on the strap 110, to receive input related to a position change of the body unit 101 as a user interaction, enabling a user to easily input various functional commands.

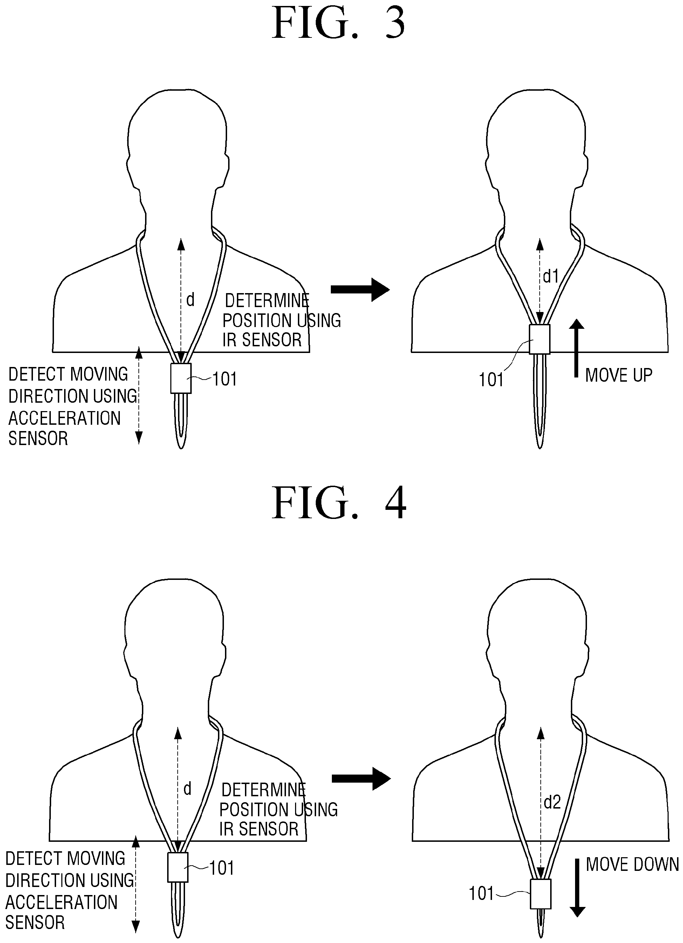

FIGs. 3 to 4 illustrate various interactions using a strap of an electronic apparatus, according to an embodiment of the present disclosure Referring to FIG. 3, a method of a first user interaction is provided. Specifically, the first user interaction is an interaction in which a user pushes or pulls the body unit 101 up.

As illustrated in FIG. 3, when a user slides up the body unit 101, an acceleration sensor within the body unit 101 detects that the body unit 101 is moving up. An IR sensor disposed in an upper portion of the body unit 101 is configured to detect that a distance to a user's face (specifically, chin) is decreasing. Accordingly, the electronic apparatus 100 reads sensing information from the IR sensor and the acceleration sensor. When determining that that distance has been decreased from an IR sensor value, and determining that the electronic apparatus 100 is moved up from an acceleration sensor value, the electronic apparatus 100 determines that the user performed a first interaction.

Various functions may be mapped to a first user interaction, and the first user interaction may be operated to perform different functions according to an operational state and an operation status. For example, when the electronic apparatus 100 is in a power saving state, the first user interaction may be used as a command to inform a shift to a normal state. Also, when the electronic apparatus 100 is shifted to a normal state, simultaneously, the first user interaction may be used as a command to shift an operation status to a voice recording status and a voice call status.

Referring to FIG. 4, a method of a second user interaction is provided. Specifically, the second user interaction is an interaction where a user pushes or pulls the body unit 100 downwards.

When a user slides down the body unit 101, as illustrated in FIG. 4, an acceleration sensor within the body unit 101 detects that the body unit 101 is being moved down. Also, an IR sensor disposed in an upper part of the body unit 101 is configured to detect that a distance to a user's face (specifically, chin) is increased. Accordingly, the electronic apparatus 100 reads sensing information from the IR sensor and the acceleration sensor. When determining that a distance has been reduced from an IR sensor value, and determining that the electronic apparatus is moved down from an acceleration sensor value, the electronic apparatus 100 determines that the user performed a second interaction.

Various functions may be mapped to the second user interaction, and the second user interaction may be operated to perform different functions according to an operational state and an operation status. For example, when the electronic apparatus 100 is in a power saving state, the second user interaction may be used as a command informing a shift to a normal state. Also, simultaneously with shifting to the normal state, the second user interaction may be used as a command to shift an operational state of the electronic apparatus 100 to a camera photographing state.

Although it is only described above that a user interaction refers to moving the body unit up and down, according to an embodiment, an interaction may be rotating the body unit 101 while a position of the body unit 101 on the strap 110 is fixed. An interaction may be holding the body unit 101 forward in the state that a position of the body unit 101 on the strap 110 is fixed.

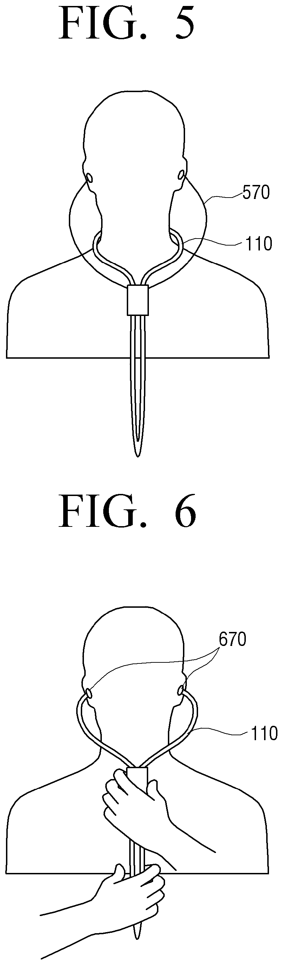

FIGs. 5 and 6 illustrate various disposition forms of earphones, according to an embodiment of the present disclosure.

Referring to FIG. 5, earphones 570 directly connected to the body unit 101 are provided.

The strap 110 includes only one strap, and both ends of the strap 110 may be respectively disposed to penetrate two penetrations within the body unit 101 in the same direction.

Accordingly, a closed curve formed by the body unit 101 may be placed on a user's neck.

The earphones 570 in which speakers 170 are provided may be connected to the body unit 101 via a cable.

Referring to FIG. 6 earphones 670 connected to the body unit 101 via the strap 110 are provided.

Referring to FIG. 6, the strap 110 includes two straps. Specifically, each of the two straps is disposed to penetrate two penetrations within the body unit 101 in the same direction. Earphones 670 are disposed in an end of each of the strap 110, and voice data provided to the earphones 670 are provided to the body unit 101 via the straps 110. In this example, the body unit 101 is connected to the strap 110 not only physically but also electrically.

The strap 110 may also consist of one strap. In this case, unlike FIG. 5, each end of the strap 110 is disposed to penetrate the two penetrations within the body unit 101 in the same direction, but a closed curve formed by the body unit 101 is disposed at the bottom of the body unit 101.

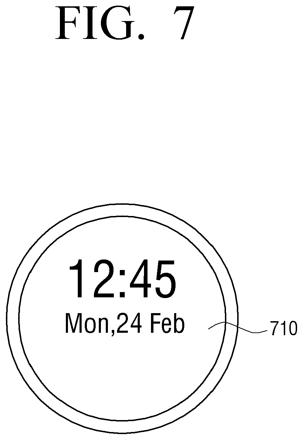

FIGs. 7 to 10 illustrate a user interface window displayable in response to a user interaction, according to an embodiment of the present disclosure.

Specifically, FIG. 7 illustrates a user interface window displayed when a user interaction is input in a normal state.

Referring to FIG. 7, a user interface window 710 is configured to display basic UI elements (for example, time information and date information) of a wearable device.

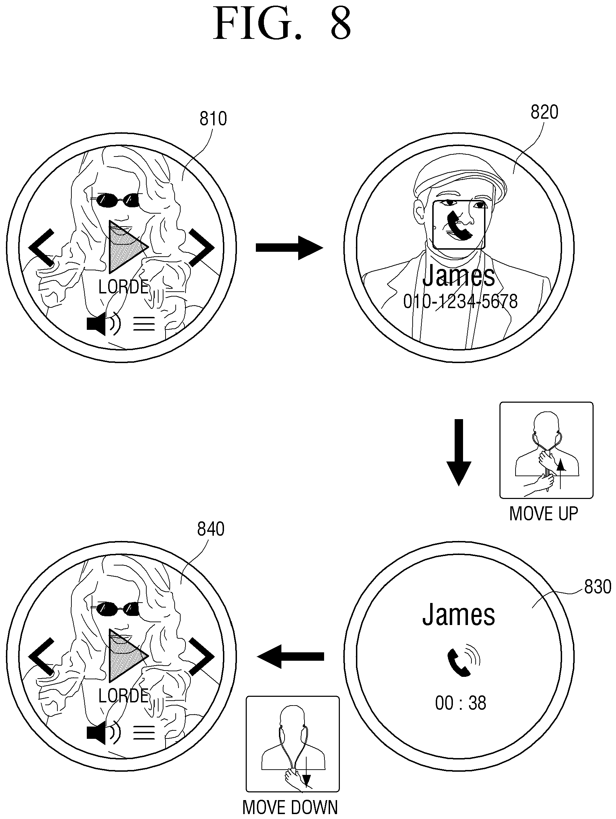

FIG. 8 illustrates a user interface displayed when a user interaction is input in the music reproduction state.

Referring to FIG. 8, a user interface 810 may display a UI element (for example, information of a content currently being reproduced, a UI to receive a control command related to music reproduction, and the like) corresponding to a current operation status, that is, music reproduction.

When a call is received in an external apparatus connected to the electronic apparatus 100, or in the electronic apparatus 100 itself, a user interface window 820 displays received call information. When a user performs the first user interaction to move the body unit 101 up, the electronic apparatus 100 is configured to receive a command to connect the call and to shift an operation status of the electronic apparatus 100 to a phone call status. Accordingly, a user interface window 830 is configured to display a UI element (for example, information on the other person talking on the phone, information on call time) corresponding to the phone call state.

When the call ends and when the user performs the second user interaction to move the body unit 101 down, the electronic apparatus 100 may take it as a command to end the corresponding call, and shift an operation status of the electronic apparatus 100 to a previous operation status, that is, a music reproduction status. Accordingly, a user interface window 840 displays a UI element corresponding to music reproduction (for example, information on content currently being reproduced, a UI to receive a control command related to music reproduction, or the like).

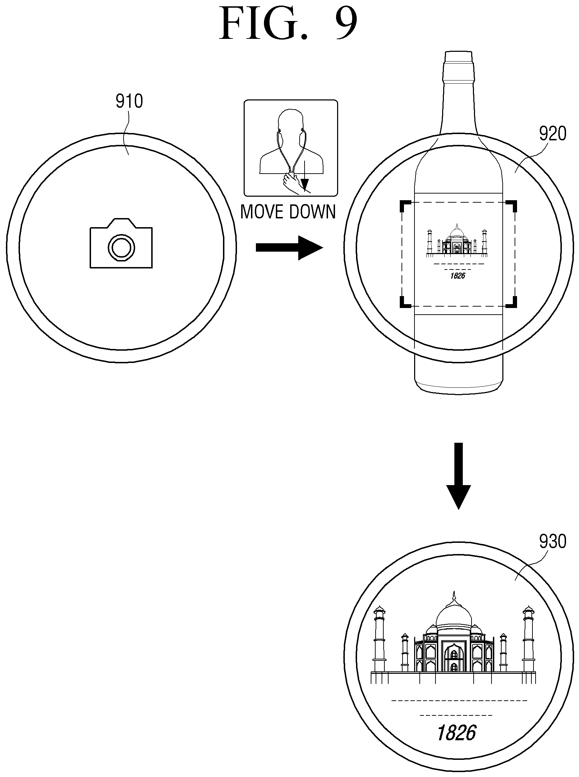

FIG. 9 illustrates a user interface displayed when a user interaction is input in a photographing status.

Referring to FIG. 9, a user interface window 910 displays a UI element (for example, an image currently being photographed in the photographing unit, a UI to receive selection of a photographing option, etc.) corresponding to a current operations status, that is, photographing.

A user interface window 920 is configured to display a photographed image according to an activation of the photographing unit. In this case, when a user performs the second user interaction to move the body unit 101 down, the electronic apparatus 100 is configured to take it as a command to increase a photographing magnification and to increase a photographing magnification of the photographing unit 130. Accordingly, a user interface window 930 displays an image in which a subject to be photographed is enlarged.

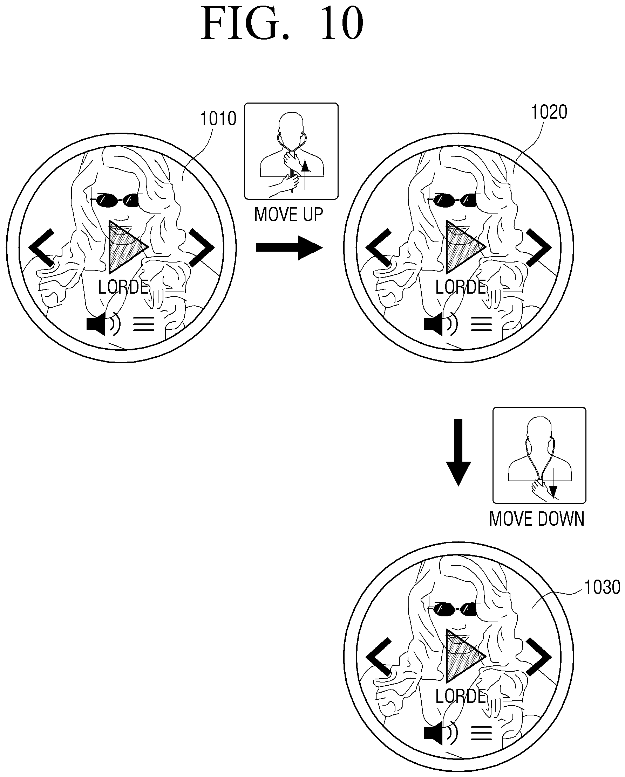

FIG. 10 illustrates a user interface displayed when a user interaction is input in a music reproduction status.

Referring to FIG. 10, a user interface window 1010 displays a UI element (for example, information on content currently being reproduced, a UI to receive a control command related to music reproduction, or the like) corresponding to a current music reproduction.

In the state that the electronic apparatus 100 plays music, when a user performs the first user interaction to move the body unit 101 up, the electronic apparatus 100 may take it as a command to increase volume, and turn up, 1020, the volume of the electronic apparatus 100.

When the user subsequently performs the second user interaction to move the body unit 101 down, the electronic apparatus 100 may take it as a command to turn down the volume, and lower 1030 the volume state of the electronic apparatus.

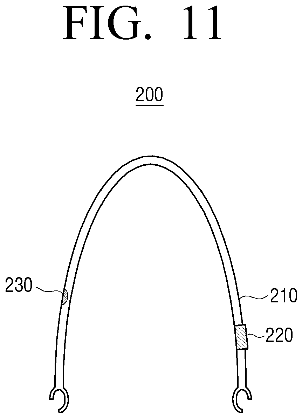

FIG. 11 illustrates a form of electronic apparatus, according to an embodiment of the present disclosure.

Referring to FIG. 11, an electronic apparatus 200 according to a second embodiment includes a strap 210, a display 220 disposed on the strap, and an audio input/output unit 230.

The strap 210 may be flexible and deformable, and includes a flexible wire for maintaining the shape of a strap. Thus, the strap 210 may control the flexible wire to be fixed to a particular body part (for example, wrist, neck, or the like) of a user.

The strap 210 may have various lengths. For example, the strap 210 may have a length enough to be worn around a wrist of a user at the least, or may have a length of a normal necklace at the most. For example, when the strap is long, the user may wear the electronic apparatus 200 on the neck like a necklace. Also, the user may use the electronic apparatus 200 by winding the strap around the wrist multiple times.

In this case, a flexible wire may be bendable or unbendable. A flexible wire may constitute the external part of the strap 210, or may be included in the strap 210. Also, the strap 210 may have an elastic (or stretchable) property which enables a user to change the shape in various shapes according to a user manipulation.

A flex sensor (or bending sensor) may be disposed in the strap 210. The flexible sensor detects a position and angle at which the strap is bent. Accordingly, the strap 210 detects a change of shape caused by a user manipulation.

In this case, the flex sensor is a sensor which includes a plurality of bending resistance elements having different resistance values according to the degree of bending on a bendable substrate, and detects an area where bending has occurred and the degree of bending in the corresponding area based on a resistance value (or voltage value) transmitted from each of the plurality of bending resistance elements.

A Hall sensor to detect whether the ends of a strap are connected to each other and a magnet maybe provided in a particular place in the strap 210. Specifically, the hall sensor and the magnet may be respectively disposed in each of the ends of the strap 210.

In this case, the Hall sensor is a sensor which identifies a direction and size of a magnetic field based on Hall effect. The Hall effect generates, when a magnetic field is applied to a conductor carrying an electric current, a voltage that is perpendicular to the magnetic field and the current. A magnet is a feature having a magnetic property. According to an embodiment, the magnet may be an electronic magnet as well as a permanent magnet.

The strap 210 includes an acceleration sensor to detect a moving direction of the strap 210, a pressure sensor to detect a user grip with respect to the strap, and the like.

A display 220 may be provided on one side of the strap 210. In this case, the display 220 is not a device that provides various information as in the first embodiment, but it is a device that only provides simple information such as whether the electronic apparatus 200 is in operation, etc., for example, a liquid crystal display (LCD).

An audio input/output unit 230 may be provided on one side of the strap 210. In this case, the audio input/output unit 230 includes at least one of a speaker and a microphone, to output a preset voice or to record a user voice, etc.

A surface of the strap 210 detects a touch input. To detect a touch input, a touch sensor may be provided in all areas of the strap or provided in some predetermined areas of the strap 210.

As described above, the electronic apparatus 200 according to the second embodiment may receive various user interactions using a strap that detects a bending state.

While it has been described in the above example that a wearable electronic device has a strap only, but according to an embodiment, the electronic apparatus may be combined with another apparatus having a display, and be operated as in the embodiment as in FIG. 1.

Although it is only described above that the strap 210 only includes the display 220 and the audio input/output unit 230, the strap 210 may further include a button to receive a particular command, a photographing element to perform photographing, various sensors to detect a moving direction of the strap, etc.

Although it is only illustrated in FIG. 11 that the electronic apparatus 200 includes the display 220 and the audio input/output unit 230, according to an embodiment, the electronic apparatus 200 may not include the two configurations. For example, the electronic apparatus 200 may be realized to only include a sensing unit which will be described below and a feature to communicate with an external apparatus.

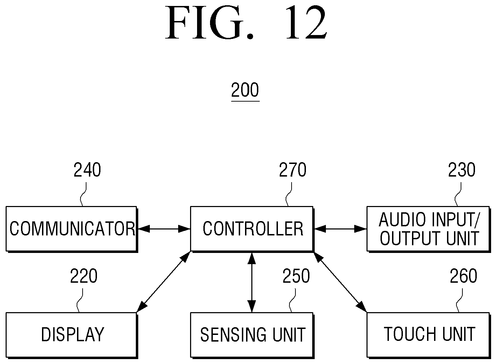

FIG. 12 illustrates a detailed configuration of an electronic apparatus, according to an embodiment of the present disclosure.

Referring to FIG. 12, a detailed configuration of the electronic device of FIG. 11 is provided. An electronic apparatus 200 includes a display 220, an audio input/output unit 230, a communicator 240, a sensing unit 250, a touch unit 260, and a processor 270.

The display 220 displays various information supported by the electronic apparatus 200. Specifically, the display 220 includes a light emitting element, such as light emitting diodes (LED), and displays an operational state (whether the apparatus is in operation) or an error state (needs charging, charging) with a light.

The audio input/output unit 230 may be disposed in a predetermined area of the strap 210. The audio input/output unit 230 includes a microphone and a speaker. According to an embodiment, the audio input/output unit 230 may be realized to include a microphone only or a speaker only.

The microphone is attached to a predetermined area of the strap to record a sound wave and generate voice data. The generated voice data may be transmitted to another electronic apparatus via the communicator 240 which will be described below.

The speaker outputs voice data, which may output a received voice data as a sound wave through the communicator 240 which will be described below.

The communicator 240 connects the electronic apparatus 200 with another electronic apparatus (or host device) or the Internet, which may be connected via a cable or wirelessly. Specifically, the communicator 240 may transmit or receive data to and from an external apparatus (for example, smartphone) via a wireless communication method, such as Bluetooth, RF communication, WiFi, NFC, and the like. In this case, the data may be not only information on content such as weather information, but also call streaming data, music streaming data transmitted from the smartphone. For example, the communicator 240 may receive voice data from an external apparatus, or transmit voice data generated in the microphone to an external apparatus.

The communicator 240 may be connected to an external apparatus (for example, desktop computer) in a wireless communication method, and input or output various data in the wireless communication method. A port to connect to an external apparatus via a cable may be used to charge the battery in the electronic apparatus 200.

The sensing unit 250 measures a position and angle of bending of the strap 210 based on a signal transmitted from a flex sensor in the strap 210. Specifically, the sensing 250 measures respective voltage values of a plurality of bending resistance elements within the flex sensor, to thereby detect a position where the bending occurred and the degree of bending in the corresponding area.

The sensing unit 250 detects a connection status of an end of the strap 210. Specifically, a hall sensor and a magnet may be respectively provided in a predetermined position (for example, both ends) in the strap 210. In this example, the sensing unit 250 determines whether both ends of the strap 210 are connected to each other based on intensity of a magnetic field detected in the hall sensor.

Also, the sensing unit 250 detects at least one of a direction and movement information of the electronic apparatus 200. Specifically, the sensing unit 250 includes a direction sensor to detect a direction of the electronic apparatus 200, an acceleration sensor to detect a moving direction and acceleration of the electronic apparatus 200 and detect a moving direction and speed of the electronic apparatus 200 using the direction sensor and the acceleration sensor.

The sensing unit 250 may include a plurality of pressure sensors, and detect a user grip in a predetermined area. The sensing unit 250 may include a plurality of acceleration sensors, and detect a direction of user manipulation with respect to a plurality of predetermined areas.

The touch unit 260 detects a user touch. Specifically, the touch unit 260 may include a user touch with respect to the strap 210.

The processor 270 is configured to control the electronic apparatus 200. Specifically, the processor 270 determines a wearing state of a strap according to a disposition form of the strap. For example, the processor determines that the strap is worn around a wrist of a user when it is determined that both ends of the strap 210 are connected to each other. Contrarily, when both ends of the strap 210 are not connected to each other, it may be determined that the strap is worn around a neck.

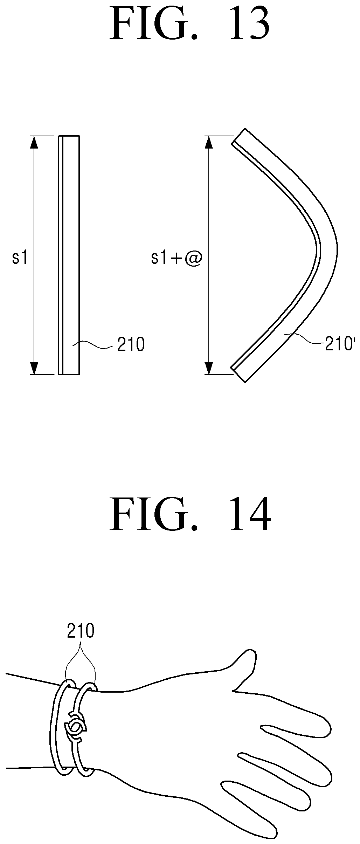

The processor 270 controls each of configurations of the electronic apparatus 200 to correspond to a determined operation state. Specifically, when a bending state of a strap is changed, the processor 270 is configured to detect a user interaction corresponding to the changed state of the strap. A user interaction using a strap may be realized in various forms, which will be described below with reference to FIGS 14 through 27.

The processor 270 may, when detecting a user interaction using the above-mentioned bending information, identify whether a user touch has been detected through the touch unit 260. Through this process, the processor 270 may, when determining that a user touch is detected, determine that the above-mentioned change of strap is a manipulation for a user interaction. Contrarily, when it is determined that a user touch is not detected, the processor 270 may not determine that the user intentionally performed manipulation for interaction, but may determine that a form of strap is changed according to a posture change or moving of the user, and not detect the interaction as mentioned above.

That is, the processor 270 may detect a user interaction using bending information only when a user touch is detected, while it is not normally using the bending information. Also, according to an embodiment, it may be realized in the form that the processor 270 performs an action corresponding to an interaction detected only when a user touch is detected while it is detecting a user interaction all along. In the above description, it is determined as to whether the change of strap is a user's intentional manipulation, using a user's touch information. However, it may also be determined whether the change of strap is a user's intentional manipulation based on pressure information from the pressure sensor other than the touch information.

Also, the processor 270 may control the communicator 240 to transmit a control command corresponding to a detected user interaction to another electronic apparatus. In the above description, the electronic apparatus 200 identifies a user interaction and transmits a control corresponding to the identified interaction to another electronic apparatus. However, according to an embodiment, bending information detected in the sensing unit 250 is directly transmitted to another electronic apparatus, and the other electronic apparatus identifies a user interaction based on the received bending information.

As described above, the electronic apparatus 200 according to the present embodiment may receive a user interaction using a bending state of a strap, etc., enabling a user to easily input various functional commands.

FIG. 13 illustrates a detailed configuration of a strap of an electronic apparatus, according to an embodiment of the present disclosure.

Referring to FIG. 13, the strap of FIG. 11 is provided. The strap 210 has a predetermined length(s1). The strap 210 is elastic. Accordingly, the strap 210' may be stretched for a predetermined length(s1+@), and the predetermined length may be bent.

The strap 210 may use rubber, silicone, urethane materials, which have low hardness, on the external side to secure a smooth touch. Also, the strap 210 may include a high elastic material (Ultem, PEI(polyetherimide), high elastic steel, TR(Tetoron/Rayon) 90, polyolefin-affiliate SRP(Self Reinforced Plastics)) and the like, to secure a sufficient deformation rate and restoring force.

A flex sensor is positioned in the strap 210. The flex sensor detects a bending area of the strap and information on a bending degree in the corresponding area.

FIGs. 14 to 19 illustrate various interactions using a strap of an electronic apparatus worn as a bracelet, according to an embodiment of the present disclosure.

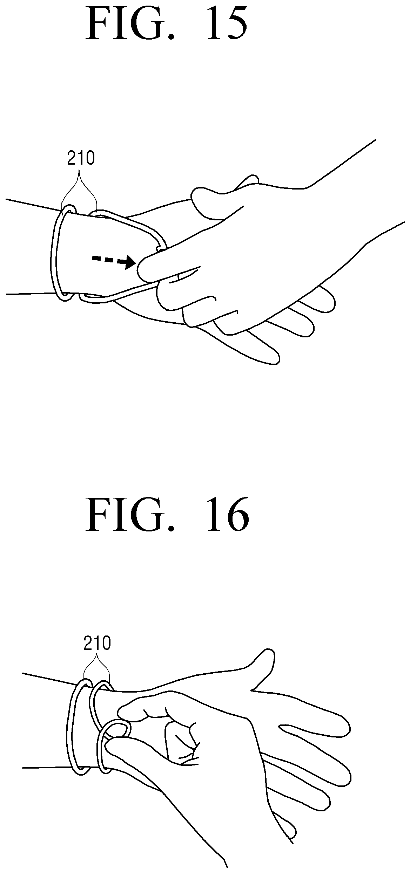

Referring to FIGs. 14 and 15 a method of a third user interaction is provided. In this case, the third user interaction is an interaction in which a user pulls a predetermined area of the strap 210.

As illustrated in FIG. 14, the strap 210 may be worn to wrap around a user wrist. In this case, when the user pulls one side of the strap 210 as illustrated in FIG. 15, a bending state of a predetermined area of the strap is changed. Specifically, a bending angle of a part pulled by the user is reduced.

Various functions may be mapped to the third user interaction, and the third user interaction may be operated as different functions according to an operational state and operation status of the electronic apparatus 200. For example, when the electronic apparatus 200 is interlocked with an external smartphone, the third user interaction may be used as a command to receive a phone call in the smartphone. Also, the third user interaction may be used as a command to activate a camera function of the external smartphone.

Referring to FIG. 16 a method of a fourth user interaction is provided. In this case, the fourth user interaction is an interaction in which a user pulls and twists a predetermined area of a strap.

The strap 210 may be worn by being wrapped around a wrist of a user. In this example, when the user pulls and twist one side of the strap 210 as illustrated in FIG. 16, a bending state of a predetermined area of the strap is changed. For example, an angle of an area pulled by a user is decreased, and a bending angle of other areas adjacent to the corresponding area is changed to a different direction from the previous area. Accordingly, the electronic apparatus 200 may, when detecting angle changes of different directions with respect to several adjacent areas, determine that a fourth user interaction is input.

Various functions may be mapped to the fourth user interaction, and the fourth user interaction may be operated as various different functions according to an operational state and operation status of the electronic apparatus 200. For example, when the electronic apparatus 200 is interlocked with an external smartphone, the fourth user interaction may be used as a command to reject a phone call in the smartphone.

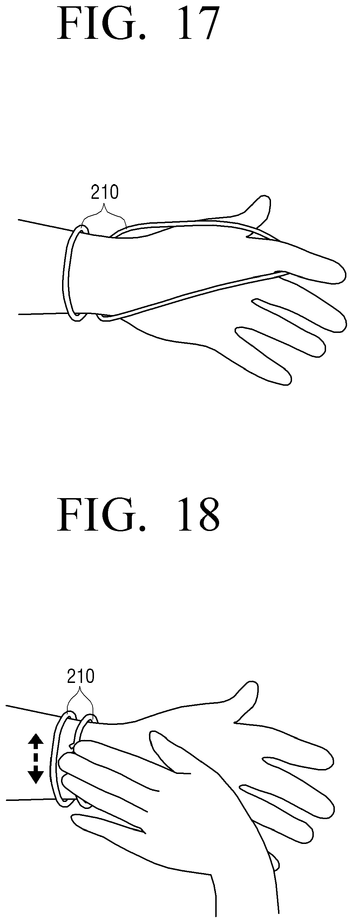

Referring to FIG. 17 a method a fifth user interaction is provided. In this example, the fifth user interaction is an interaction in which a user pulls a predetermined area of a strap and hangs the strap on a finger.

The strap 210 may be worn by being wrapped around a wrist of a user as illustrated in FIG. 17. Here, a user may pull one side of the strap 210 and hang the one side on a finger. In this example, a bending angle of a predetermined area is decreased. Meanwhile, although the fifth user interaction is similar in form to the third user interaction, more strap should be pulled in order for the strap to be hung on a user's finger. That is, the elasticity within the strap is larger than that in FIG. 15, and an angle of a predetermined area is narrower than the third user interaction. Accordingly, the electronic apparatus 200 may, when detecting such feature, determine that the fifth user interaction is input.

Various functions may be mapped to an eighth user interaction, and the eighth user interaction may be operated as various different functions according to an operation status and operation status of the electronic apparatus 200. For example, when the electronic apparatus 200 is interlocked with an external smartphone, the eighth user interaction may be used to activate a camera of the smartphone.

Referring to FIG. 18, a method of a sixth user interaction is provided. Here, the sixth user interaction is an interaction in which a user rotates a strap.

When a user rotates the strap 210 as illustrated in FIG. 12, an acceleration sensor and a direction sensor within the strap 210 detects that the strap 210 is rotating. Accordingly, the electronic apparatus 200 may, when detecting a direction information is changed without a change of bending of the strap, determine that the sixth user interaction is input.

Various functions may be mapped to the sixth user interaction. In particular, the sixth user interaction may be used to convert a sound of a connected external apparatus to mute.

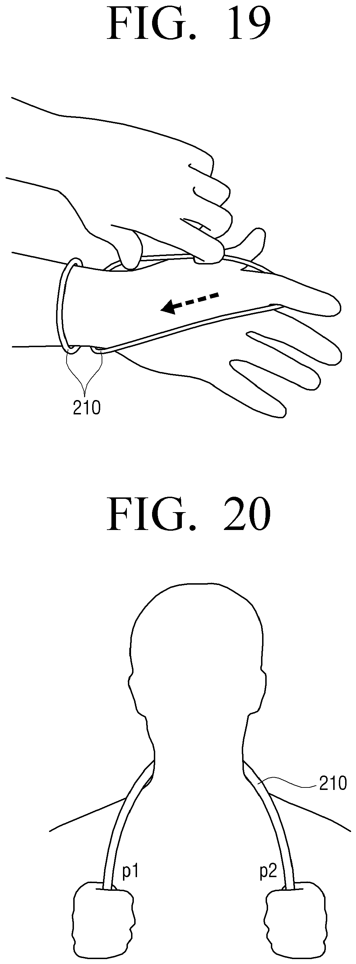

Referring to FIG. 19, a method of a seventh user interaction is provide. Here, the seventh user interaction is an interaction in which a user pulls a predetermined area of a strap and hangs it on a finger, and pulls the strap in a particular direction.

The user may pull one side of the strap 210 and hang it on a finger. In this case, an angle of a predetermined area is decreased. In such a disposition form, the user may enter input to adjacent area of the particular area of which angle has been decreased. Accordingly, the electronic apparatus 200 may, when receiving the above-mentioned bending information and touch information in a lump, determine that the seventh user interaction is input.

Various functions may be mapped to the seventh user interaction. For example, the seventh user interaction may be used to adjust volume of a connected electronic apparatus. Also, the seventh user interaction may be divided according to a touch position or direction of a user.

For example, the seventh user interaction may be divided to a command to turn up the volume when detecting a touch input with respect to the left portion of a particular area, and a command to turn down the volume when detecting a touch input with respect to the right portion of the particular area. Alternatively, the seventh user interaction may be used to turn up the volume with respect to continuous touch inputs that move farther away from a particular area, and to turn down the volume with respect to continuous touch inputs that move closer to the particular area.

Although it is described above that the electronic apparatus 200 may be operated in the state that it is worn around a wrist of a user, according to an embodiment, the electronic apparatus 200 may be implemented in the form of a necklace. With respect to interactions in such a case, it will be described with reference to FIGS. 20 to 27.

FIGs. 20 to 27 illustrate various interactions using a strap of an electronic apparatus worn as a necklace, according to an embodiment of the present disclosure.

Referring to FIG. 20 a method of an eighth user interaction is provided. The eighth user interaction is an interaction to grabbing two particular areas of a strap.

The user may place the strap 210 on the neck, and the user may grab both ends of the strap 210 as illustrated in FIG. 20. A pressure sensor capable of detecting a user grip may be disposed in a particular area of the strap 210, and the electronic apparatus 200 may, when the preset two pressure sensors p1 and p2 detect a user grip, determine it as the eighth user interaction.

Various functions may be mapped to the eighth user interaction. For example, the eighth user interaction may be used to interlock the electronic apparatus 200 with a particular device (for example, television).

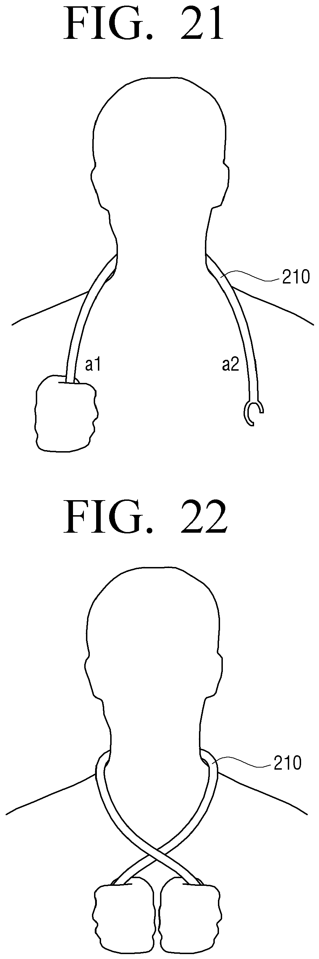

Referring to FIG. 21 a method of a ninth user interaction is provided. The ninth user interaction is an interaction which grabs two particular areas of a strap.

The user may place the strap 210 around the neck, and pull one end of the strap as illustrated in FIG. 21. A pressure sensor to detect a user grip may be disposed in a particular area of the strap 210, and acceleration sensors a1 and a2 to detect moving of the electronic apparatus 200 may be disposed in the strap 210. Thus, the electronic apparatus 200 may, when detecting a user grip in a preset pressure sensor and detecting moving of a strap to a predetermined direction, determine the corresponding input as the ninth interaction.

Various functions may be mapped to the ninth user interaction. For example, the ninth user interaction may be used to adjust volume of a device interlocked with the electronic apparatus.

Referring to FIG. 22, a method of a tenth user interaction is provided. The tenth user interaction is an interaction to grab two particular areas of a strap and intersect them.

The user may place the strap 210 on the neck, and grab both ends of the strap and have the strap intersect each other as illustrated in FIG. 22. A pressure sensor capable of detecting a user grip is disposed in a particular area of the strap 210, and a flex sensor to detect bending of a particular area is disposed in the strap 210. Thus, the electronic apparatus 200 may, when detecting a user grip in a preset pressure sensor and detecting bending of a particular area of a strap, determine the corresponding input as the tenth user interaction.

The tenth user interaction may, as a non-limiting example, be used to change operational state of a device interlocked with the electronic apparatus, or to change channels.

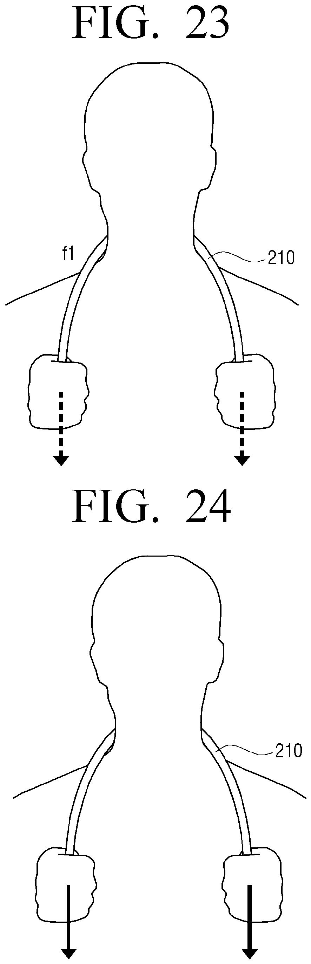

Referring to FIGs. 23 and 24, methods of eleventh and twelfth user interactions is provided. The eleventh and twelfth user interactions are an interaction which pulls two particular areas of a strap.

A user may place the strap 210 on the neck as illustrated in FIG. 20, and in this case, the user may pull both ends of the strap 210 down as illustrated in FIG. 23 and FIG. 24. A pressure sensor capable of detecting a user grip is disposed in a particular area of the strap 210, and a flex sensor flto detect bending of a particular area is disposed in the strap 210. Thus, when the user pulls the strap down, a bending state of the portion on the neck of the user is changed. Accordingly, the electronic apparatus 200 may, when detecting a user grip in a preset pressure sensor and detecting bending of a particular area of a strap, determine that the corresponding input is the eleventh and twelfth user interactions. Also, the electronic apparatus 200 may distinguish the eleventh and twelfth user interactions from each other according to whether a change of the bending state of the strap is abrupt.

Meanwhile, the eleventh user interaction may, as a non-limiting example, be used to receive a call of a smartphone interlocked with the electronic apparatus, or to reproduce (or pause) an image of a device connected to the electronic apparatus 200.

Also, the twelfth user interaction may, as non-limiting examples, be used to end or reject a phone call of interlocked connected smartphone, or to start or end an image of the connected smartphone.

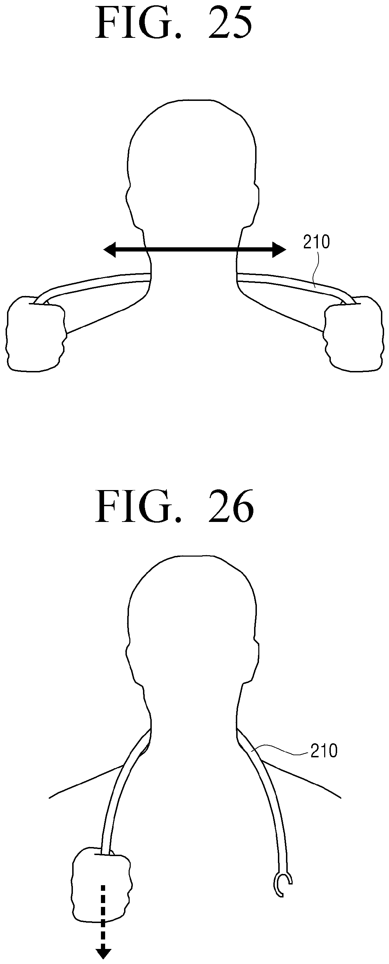

Referring to FIG. 25, a method of a thirteenth user interaction is provided. The thirteenth user interaction is an interaction which pulls two particular areas of a strap towards shoulder.

The user may place the strap 210 on the neck, and in this case, the user may pull both ends of the strap 210 to the left or to the right. A pressure sensor capable of detecting a user grip may be disposed in a particular area of the strap 210, and a flex sensor to detect bending of a particular area may be disposed in the strap. Thus, when the user pulls the strap to the left or to the right, an angle of a bent area is widened. Accordingly, the electronic apparatus 200 may, when detecting a user grip in a preset pressure sensor and detecting a change of bending angle of a particular area of a strap, determine the corresponding input as the thirteenth user interaction.

The thirteenth user interaction may, as non-limiting examples, be used to change volume of an interlocked smartphone to mute, or to convert an audio output method of an interlocked device.

Referring to FIG. 26, a method of a fourteenth user interaction is provided. Specifically, the fourteenth user interaction is an interaction which pulls a particular area of a strap and twists the strap.

A user may place the strap 210 on the neck, and in this case, the user may grab one end of the strap 210 and twist it. A pressure sensor capable of detecting a user grip may be disposed in a particular area of the strap 210, and an acceleration sensor to detect moving of the electronic apparatus 200 may be disposed in the strap 210. Thus, the electronic apparatus 200 may, when detecting a user grip in only one preset pressure sensor and detecting moving of a strap to a particular direction (a direction different from a disposition direction of the strap), determine the corresponding input as the fourteenth user interaction.

Various functions may be mapped to the fourteenth user interaction. For example, the fourteenth user interaction may be used to end connection with an interlocked device.

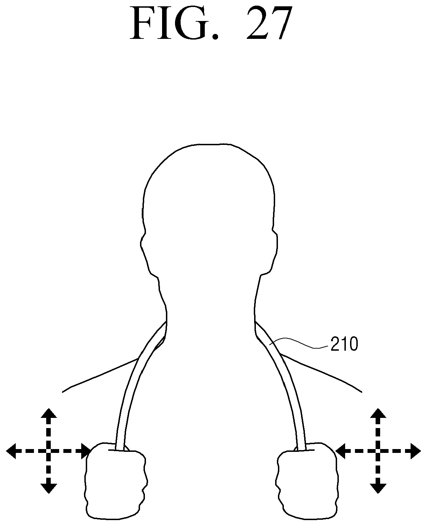

Referring to FIG. 27, a method of a fifteenth user interaction is provided. Specifically, the fifteenth user interaction is an interaction which pulls both ends of a strap and adjusts each of the ends like a joystick.

An acceleration sensor may be disposed in the respective ends of the strap. Accordingly, a user may place the strap on the neck, and use both ends of the strap like a joystick. The electronic apparatus 200 may, in the state that interlocked connected device is executing a game, when two preset pressure sensors detect a user grip, determine the corresponding input as the fifteenth user interaction. According to an embodiment, a direction control of a user may not only correspond to a joystick, but also may be operated to correspond to various exercise forms.

Although it is described above that the electronic apparatus 200 may be worn by a body of a user, but according to an embodiment, it may also be operated without being worn.

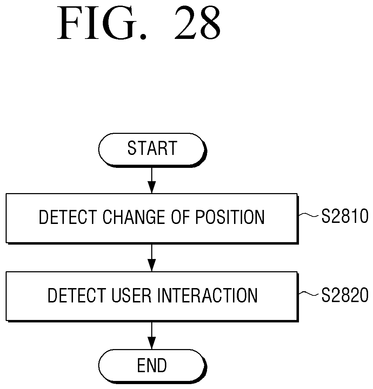

FIG. 28 is a flowchart of a method of an electronic apparatus, according to an embodiment of the present disclosure.

Referring to FIG. 28, the method of operating an electronic apparatus 100 includes detecting, in step S2810, a change of position of a body unit 101 movably disposed on a strap 110 by a sensing unit 160. Specifically, the change of position of the body unit 101 may be detected using an IR sensor and acceleration sensor of the sensing unit 160 disposed on the body unit 101.

In addition, the method includes detecting, in step S2820, a user interaction corresponding to the position change. Specifically, when the body unit 101 is moved in a direction of the user along the strap 110, it may be determined that the first user interaction is input. In contrast, when the body unit 101 is moved in a direction far away from the user along the strap 110, it may be determined that the second user interaction is input.

In addition, the method includes displaying a user interface (UI) element on a display 120 of the electronic apparatus 100 that corresponds to the detected user interaction. The displayed UI elements are described with reference to FIGs. 7 to 10, and the detailed description thereof is omitted.

The aforementioned methods of controlling the electronic apparatus may be implemented as a software program, code, or instructions executable by a processor, and the program, code, or instructions may be stored in a non-transitory computer-readable medium to be executed by a processor.

A non-transitory computer readable medium may refer to a machine-readable medium or device that stores data semi-permanently and not for a short period of time, such as a register, cache, memory, and the like. The aforementioned various applications or programs may be stored in a non-transitory computer readable medium such as a compact disc (CD), a digital versatile disc (DVD), a hard disk, a Blu-ray disc, a universal serial bus (USB) stick, a memory card, a ROM, etc.

The embodiments described herein have been presented for description and understanding of the technical details, but are not intended to limit the scope of the present disclosure. Therefore, the scope of the present disclosure is defined, not by the detailed description and embodiments, but by the following claims and their equivalents.

## Claims

1. An electronic apparatus, comprising:
a strap (110);
a body unit (101) movably disposed on the strap (110);
a sensing unit (160) configured to detect a change of position of the body unit (101) on the strap (110);
a plurality of pressure sensing units disposed in the strap that detect a pressure; and
the sensing unit (160) configured to detect a user touch input on the body unit (101),
a processor (190) configured to, when a change of position is detected, determine whether a user touch input is detected via the sensing unit,
and when a user touch input is detected, perform an action corresponding to a user interaction corresponding to the position change and a position of at least one pressure sensing unit where the pressure is sensed.

2. The apparatus as claimed in claim 1, wherein the sensing unit (160) comprises an infrared, IR, sensor which is configured to detect a distance and an acceleration sensor which is configured to detect a moving direction of the body unit (101).

3. The apparatus as claimed in claim 1, further comprising:
a microphone (180) disposed on the body unit (101) to record a sound wave and generate voice data; and
a photographing unit (130) disposed on the body unit (101) to photograph an image,
wherein the processor (190) is configured to activate or deactivate at least one of the microphone (180) and the photographing unit (130) disposed on the body unit (101) in response to the user interaction.

4. The apparatus as claimed in claim 3, wherein the processor (190), in response to detecting the change of position of the body unit (101) while the photographing unit (130) is in operation, is configured to vary a photographing magnification of the photographing unit.

5. The apparatus as claimed in claim 3, further comprising:
a communicator (140) configured to transmit the generated voice data to another electronic apparatus.

6. The apparatus as claimed in claim 1, further comprising:
a display (120) disposed on one side of the body unit (101),
wherein the processor (190) is configured to control the display (120) to display a user interface (UI) element corresponding to the user interaction.

7. The apparatus as claimed in claim 1, further comprising:
a speaker (170) disposed on one side of the strap (110) to output voice data,
wherein the processor (190) is configured to control the speaker (170) to output a voice corresponding to the detected user interaction.

8. The apparatus as claimed in claim 7, wherein the processor (190), in response to a change of position of the body unit (101) being detected while the speaker (170) is outputting the voice data, is configured to vary a volume of the speaker (170) in response to the position change.

9. The apparatus as claimed in claim 7, wherein the speaker (170) is an earphone disposed on an end of the strap.

10. The apparatus as claimed in claim 7, wherein the speaker (170) is an earphone (570) connected to the body unit (101) via a cable.

11. The apparatus as claimed in claim 1, wherein the body unit (101) comprises two penetrations, and
wherein each end of the strap (110) penetrates the two penetrations in a same direction.

12. A method of controlling an electronic apparatus (100) including a strap (110), the method comprising:
detecting a change of position of a body unit (101) movably disposed on the strap (110); and
when a change of position is detected,
determining whether a user touch input on the body unit (101) by a sensing unit (160) is detected; and
performing by the processor(190) an action corresponding to a user interaction corresponding to the position change and a position of at least one pressure sensing unit where the pressure is sensed.

13. The method as claimed in claim 12, further comprising:
activating or deactivating at least one from among a microphone (180) and photographing unit (130) disposed on the body unit (101) in response to the user interaction;
in response to detecting the change of position of the body unit (101) while the photographing unit (130) is in operation, varying a photographing magnification of the photographing unit (130); and
transmitting voice data generated in the microphone (180) to another electronic apparatus.

14. The method as claimed in claim 12, further comprising:
outputting a voice corresponding to the detected user interaction to a speaker (170); and
in response to detecting the change of position of the body unit (101) while the voice is being output, varying a volume of the speaker (170).

## Patentansprüche

1. Elektronische Vorrichtung, umfassend:
einen Gurt (110);
eine Körpereinheit (101), die bewegbar an dem Gurt (110) angeordnet ist;
eine Erfassungseinheit (160), die eingerichtet ist, um eine Veränderung der Position der Körpereinheit (101) an dem Gurt (110) zu erfassen;
eine Vielzahl von Druckerfassungseinheiten, die in dem Gurt angeordnet sind, die einen Druck erfassen; und
wobei die Erfassungseinheit (160) eingerichtet ist, um eine Benutzerberührungseingabe an der Körpereinheit (101) zu erfassen, ein Prozessor (190) eingerichtet ist, um, wenn eine Änderung der Position erfasst wird, zu bestimmen, ob eine Benutzerberührungseingabe mittels der Erfassungseinheit erfasst wird, und, wenn eine Benutzerberührungseingabe erfasst wird, einen Vorgang, der einer Benutzerinteraktion entsprechend der Positionsänderung und einer Position von mindestens einer Druckerfassungseinheit, an der der Druck erfasst wird, entspricht, durchzuführen.

2. Vorrichtung nach Anspruch 1, wobei die Erfassungseinheit (160) einen Infrarot, IR,-Sensor, welcher eingerichtet ist, um eine Distanz zu erfassen, und einen Beschleunigungssensor umfasst, welcher eingerichtet ist, um eine Bewegungsrichtung der Körpereinheit (101) zu erfassen.

3. Vorrichtung nach Anspruch 1, ferner umfassend:
ein Mikrofon (180), das an der Körpereinheit (101) angeordnet ist, um eine Klangwelle aufzuzeichnen und Stimmdaten zu erzeugen; und
eine Bildaufnahmeeinheit (130), die an der Körpereinheit (101) angeordnet ist, um ein Bild aufzunehmen;
wobei der Prozessor (190) eingerichtet ist, um das Mikrofon (180) und/oder die Bildaufnahmeeinheit (130), die an der Körpereinheit (101) angeordnet sind, in Ansprechen auf die Benutzerinteraktion zu aktivieren oder deaktivieren.

4. Vorrichtung nach Anspruch 3, wobei der Prozessor (190) in Ansprechen auf das Erfassen der Änderung der Position der Körpereinheit (101), während die Bildaufnahmeeinheit (130) in Betrieb ist, eingerichtet ist, um eine Bildaufnahmevergrößerung der Bildaufnahmeeinheit zu modifizieren.

5. Vorrichtung nach Anspruch 3, ferner umfassend:
einen Kommunikator (140), der eingerichtet ist, um die erzeugten Stimmdaten an eine andere elektronische Vorrichtung zu übertragen.

6. Vorrichtung nach Anspruch 1, ferner umfassend:
eine Anzeige (120), die an einer Seite der Körpereinheit (101) angeordnet ist,
wobei der Prozessor (190) eingerichtet ist, um die Anzeige (120) zu steuern, um ein Benutzerschnittstelle(UI)-Element entsprechend der Benutzerinteraktion anzuzeigen.

7. Vorrichtung nach Anspruch 1, ferner umfassend:
einen Lautsprecher (170), der an einer Seite des Gurts (110) angeordnet ist, um Stimmdaten auszugeben,
wobei der Prozessor (190) eingerichtet ist, um den Lautsprecher (170) zu steuern, um eine Stimme entsprechend der erfassten Benutzerinteraktion auszugeben.

8. Vorrichtung nach Anspruch 7, wobei der Prozessor (190) in Ansprechen auf eine Änderung der Position der Körpereinheit (101), die erfasst wird, während der Lautsprecher (170) die Stimmdaten ausgibt, eingerichtet ist, um eine Lautstärke des Lautsprechers (170) in Ansprechen auf die Positionsänderung zu modifizieren.

9. Vorrichtung nach Anspruch 7, wobei der Lautsprecher (170) ein Kopfhörer ist, der an einem Ende des Gurts angeordnet ist.

10. Vorrichtung nach Anspruch 7, wobei der Lautsprecher (170) ein Kopfhörer (570) ist, der mit der Körpereinheit (101) über ein Kabel verbunden ist.

11. Vorrichtung nach Anspruch 1, wobei die Körpereinheit (101) zwei Durchdringungen umfasst, und
wobei jedes Ende des Gurts (110) die zwei Durchdringungen in einer gleichen Richtung durchdringt.

12. Verfahren zum Steuern einer elektronischen Vorrichtung (100) einschließlich eines Gurts (110), das Verfahren umfassend:
Erfassen einer Änderung der Position einer Körpereinheit (101), die bewegbar an dem Gurt (110) angeordnet ist; und
wenn eine Änderung der Position erfasst wird, Bestimmen, ob eine Benutzerberührungseingabe an der Körpereinheit (101) durch eine Erfassungseinheit (160) erfasst wird; und
Durchführen, durch den Prozessor (190), eines Vorgangs, der einer Benutzerinteraktion entsprechend der Positionsänderung, und einer Position von mindestens einer Druckerfassungseinheit, an der der Druck erfasst wird, entspricht.

13. Verfahren nach Anspruch 12, ferner umfassend:
Aktivieren oder Deaktivieren mindestens eines aus einem Mikrofon (180) und einer Bildaufnahmeeinheit (130), die an der Körpereinheit (101) angeordnet sind, in Ansprechen auf die Benutzerinteraktion;
in Ansprechen auf das Erfassen der Änderung der Position der Körpereinheit (101), während die Bildaufnahmeeinheit (130) in Betrieb ist, Modifizieren einer Bildaufnahmevergrößerung der Bildaufnahmeeinheit (130) ; und
Übertragen von Stimmdaten, die in dem Mikrofon (180) erzeugt werden, an eine andere elektronische Vorrichtung.

14. Verfahren nach Anspruch 12, ferner umfassend:
Ausgeben einer Stimme, die der erfassten Benutzerinteraktion entspricht, an einen Lautsprecher (170); und
in Ansprechen auf das Erfassen der Änderung der Position der Körpereinheit (101), während die Stimme ausgegeben wird, Modifizieren einer Lautstärke des Lautsprechers (170).

## Revendications

1. Appareil électronique comprenant :
une lanière (110) ;
une unité de corps (101) disposée de manière mobile sur la lanière (110) ;
une unité de détection (160) configurée pour détecter un changement de position de l'unité de corps (101) sur la lanière (110) ;
une pluralité d'unités de détection de pression disposées dans la lanière, lesquelles détectent une pression ; et
une unité de détection (160) configurée pour détecter une saisie tactile d'utilisateur sur l'unité de corps (101),
un processeur (190) configuré pour, lorsqu'un changement de position est détecté, déterminer si une saisie tactile d'utilisateur est détectée via l'unité de détection,
et lorsqu'une saisie tactile d'utilisateur est détectée, effectuer une action correspondant à une interaction d'utilisateur correspondant au changement de position et une position d'au moins une unité de détection de pression où la pression est détectée.

2. Appareil tel que revendiqué par la revendication 1, dans lequel l'unité de détection (160) comprend un capteur infrarouge, IR, configuré pour détecter une distance et un capteur d'accélération configuré pour détecter une direction de déplacement de l'unité de corps (101).

3. Appareil tel que revendiqué par la revendication 1, comprenant en outre :
un microphone (180) disposé sur l'unité de corps (101) pour enregistrer une onde sonore et générer des données vocales ; et
une unité photographique (130) disposée sur l'unité de corps (101) pour photographier une image,
dans lequel le processeur (190) est configuré pour activer ou désactiver au moins l'un(e) parmi le microphone (180) et l'unité photographique (130) disposés sur l'unité de corps (101) en réponse à l'interaction de l'utilisateur.

4. Appareil tel que revendiqué par la revendication 3, dans lequel le processeur (190), en réponse à la détection du changement de position de l'unité de corps (101) pendant que l'unité photographique (130) fonctionne, est configuré pour faire varier un grossissement photographique de l'unité photographique.

5. Appareil tel que revendiqué par la revendication 3, comprenant en outre :
un communicateur (140) configuré pour transmettre les données vocales générées à un autre appareil électronique.

6. Appareil tel que revendiqué par la revendication 1, comprenant en outre :
un afficheur (120) disposé d'un côté de l'unité de corps (101),
dans lequel le processeur (190) est configuré pour contrôler l'afficheur (120) pour afficher un élément d'interface utilisateur (UI) correspondant à l'interaction de l'utilisateur.

7. Appareil tel que revendiqué par la revendication 1, comprenant en outre :
un haut-parleur (170) disposé d'un côté de la lanière (110) pour faire sortir des données vocales,
dans lequel le processeur (190) est configuré pour contrôler le haut-parleur (170) pour faire sortir une voix correspondant à l'interaction d'utilisateur détectée.

8. Appareil tel que revendiqué par la revendication 7, dans lequel le processeur (190), en réponse à un changement de position de l'unité de corps (101) détecté pendant que le haut-parleur (170) fait sortir les données vocales, est configuré pour faire varier un volume du haut-parleur (170) en réponse au changement de position.

9. Appareil tel que revendiqué par la revendication 7, dans lequel le haut-parleur (170) est un écouteur disposé sur une extrémité de la lanière.

10. Appareil tel que revendiqué par la revendication 7, dans lequel le haut-parleur (170) est un écouteur (570) connecté à l'unité de corps (101) via un câble.

11. Appareil tel que revendiqué par la revendication 1, dans lequel l'unité de corps (101) comprend deux pénétrations, et
dans lequel chaque extrémité de la lanière (110) pénètre dans les deux pénétrations dans une même direction.

12. Procédé pour contrôler un appareil électronique (100) comprenant une lanière (110), le procédé comprenant :
la détection d'un changement de position d'une unité de corps (101) disposée de manière mobile sur la lanière (110) ; et
lorsqu'un changement de position est détecté,
la détermination si une saisie tactile d'utilisateur sur l'unité de corps (101) est détectée par une unité de détection (160) ; et
la réalisation par le processeur (190) d'une action correspondant à une interaction d'utilisateur correspondant au changement de position et une position d'au moins une unité de détection de pression où la pression est détectée.

13. Procédé tel que revendiqué par la revendication 12, comprenant en outre :
l'activation ou la désactivation d'au moins l'un(e) parmi un microphone (180) et une unité photographique (130) disposés sur l'unité de corps (101) en réponse à l'interaction de l'utilisateur ;
en réponse à la détection du changement de position de l'unité de corps (101) pendant que l'unité photographique (130) fonctionne, la variation d'un grossissement photographique de l'unité photographique (130) ; et
la transmission de données vocales générées dans le microphone (180) à un autre appareil électronique.

14. Procédé tel que revendiqué par la revendication 12, comprenant en outre :
la sortie d'une voix correspondant à l'interaction d'utilisateur détectée à l'attention d'un haut-parleur (170) ; et
en réponse à la détection du changement de position de l'unité de corps (101) pendant que l'on fait sortir la voix, la variation du volume du haut-parleur (170).
